# EUROPEAN PATENT SPECIFICATION

(11) **EP 4 418 628 B1**
(45) Date of publication and mention of the grant of the patent: **30.09.2026**
(21) Application number: 22883733.2
(22) Date of filing: 10.08.2022
(51) Int. Cl.: H04L 67/02, H04W 92/04, H04L 69/08, H04L 67/51, H04L 67/14

(54) **TERMINAL DEVICE AND INTERFACE METHOD PERFORMED BY SAME DEVICE**
ENDGERÄTEVORRICHTUNG UND VON DIESER VORRICHTUNG DURCHGEFÜHRTES SCHNITTSTELLENVERFAHREN
DISPOSITIF TERMINAL ET PROCÉDÉ D'INTERFACE MIS EN OEUVRE PAR LEDIT DISPOSITIF

(30) Priority: 18.10.2021 KR 20210138675
(43) Date of publication of application: 21.08.2024
(73) Proprietor: SK TELECOM CO., LTD., Seoul 04539 (KR)
(72) Inventor: LEE, Seong Jun, Seoul (KR); LEE, Dong Jin, Seoul (KR)
(74) Representative: Isarpatent
(86) International application number: PCT/KR2022/011909
(87) International publication number: WO 2023/068505

(56) References cited:
- KR-A- 20190 049 508
- KR-A- 20210 046 179
- KR-A- 20210 048 836
- KR-A- 20210 080 910
- KR-A- 20220 051 639
- KR-B1- 102 178 348
- US-B1- 10 299 128

## Description

### Technical Field

The present disclosure relates to a user equipment (UE) technology and, more particularly, to a technology for rendering a UE into a network function (NF) by configuring the UE as a service-based architecture (SBA).

This application is based on and claims priority under 35 U.S.C. 119 to Korean Patent Application No. 10-2021-0138675, filed on October 18, 2021, in the Korean Intellectual Property Office.

### Background Art

5G defines a network structure for supporting a UE, a base station (access), a core, and a server end to end, and defines a network structure in which a control plane of a control signaling function and an user plane of a data transmission/reception function are divided by separating control signaling and data transmission/reception functions performed complexly by a single node (e.g., a S-GW and a P-GW) in existing LTE (4G).

In 5G, control plane (CP) nodes may be defined as an access and mobility management function (AMF) that controls radio section access of a UE, a policy control function (PCF) that manages/controls UE information, subscription service information for each UE, and a policy on charging or the like, a session management function (SMF) that controls/manages a session for each UE to use a data service, a network exposure function (NEF) that is responsible for a function of sharing information with an external network, a unified data management/authentication function (UDM/AUSF) that manages/controls a subscriber DB and authentication of a user, a network repository function (NRF) that manages/controls information about each network function (NF) in a network, a charging function (CHF) that processes charging of a subscriber, and the like.

Further, in 5G, a user plane (UP) node may be defined as a user plane function (UPF) that transmits and receives data between a UE and a server on an external service network (e.g., the Internet) through a session with the UE, based on control (interworking) of the SMF.

The 5G core defines a network function (NF) that performs a specific function, and defines interworking between NFs using a service-based interface (SBI). In 5G, a CP node and a UP node correspond to an NF.

Accordingly, in the 5G core, communication between NF services is performed using an SBI, thereby very easily installing, distribution, and upgrading NFs, also configuring virtualization (VNF and CNF), and very efficiently using system resources.

However, for communication between a UE and a core network, only N1 interface-based communication through a radio access network (RAN) is used.

That is, according to current 5G, the UE is in a level of still using a legacy interface (e.g., N1) and in a level in which the UE has not evolved into a new 5G architecture and has not been rendered into an NF.

This is the reason why a procedure of the CP for processing a control signal for the UE is still centralized and a bottleneck occurs due to CP processing compared to UP processing despite evolution of a network structure that the UP node (e.g., the UPF) is distributed to an edge for ultra-low latency in 5G.

Accordingly, the present disclosure proposes a specific technology enabling a UE to evolve into a 5G architecture and to be configured as an NF by configuring the UE as a service-based architecture (SBA).

US 10 299 128 B1 relates to natively integrating blockchain technologies in telecommunication networks (e.g., 4G, 5G, etc.) to provide security for roaming User Equipment (UE).

### Disclosure of Invention

### Technical Problem

A technical aspect of the present disclosure is to provide a specific technology for rendering a UE into a network function (NF) by configuring the UE as a service-based architecture.

### Solution to Problem

The present invention is set out by the appended claims.

A user equipment (UE) according to the present invention, as defined by independent claim 1, includes an NF communication unit configured to perform communication required in relation to use of the service, wherein the NF communication unit may be configured to perform communication using a service-based interface (SBI) message according to an SBI between network functions (NFs). The NF communication unit includes an SBI module configured to process the SBI message. The SBI module is a message interface for processing each NF service in which control plane (CP) function is rendered into an SBI in a unit of NF service.

Specifically, an NF with which the NF communication unit communicates may be at least one of an NF service in the UE, other UE, an NF service in other UE, an NF of a control plan, and an NF of a user plane.

Specifically, the SBI module may be configured to operate in at least one transmission/reception method of request/response-based message transmission/reception and subscription/notification-based message transmission/reception.

Specifically, the SBI module may be configured to perform conversion between a message according to other interface and the SBI message according to the SBI when transmitting/receiving a message.

Specifically, the NF communication unit may be configured to directly communicate with an edge application server discovery function (EASDF) by using the SBI message when changing information about a server connected to use the service.

Specifically, the NF communication unit may be configured to use the SBI message when transmitting a notification according to detection of a specific event previously subscribed to by an access and mobility management function (AMF).

Specifically, the NF communication unit may be configured to directly communicate with a session management function (SMF) that manages/controls a UE session by using the SBI message when processing session management for the UE.

Specifically, the NF communication unit may be configured to directly communicate with a policy control function (PCF) that manages/controls a plurality of policies including a QoS policy by using the SBI message when processing a QoS policy for the UE.

Specifically, the NF communication unit may be configured to directly communicate by using the SBI message when performing a registration process of registering an NF of the UE in a network repository function (NRF) that manages/controls information about each NF in a network.

An interface method performed by a user equipment (UE) according to an embodiment of the present disclosure may include a communication operation of performing communication related to use of a service, wherein the communication operation may include performing communication using a service-based interface (SBI) message according to an SBI between network functions (NFs).

### Advantageous Effects of Invention

According to embodiments of the present disclosure, it is possible to render not only 5G devices (e.g., a CP node and a UP node) but also a UE into NFs by proposing a specific technology enabling a UE to evolve into a 5G architecture and to be configured as an NF.

### Brief Description of Drawings

FIG. 1 illustrates a structure of a 5G system;
FIG. 2 illustrates a 5G structure in which a UE is configured as a NF according to the present disclosure;
FIG. 3 and FIG. 4 illustrate a concept in which an SBA is configured in a UE according to the present disclosure;
FIG. 5 is a block diagram illustrating a configuration of a UENF according to an embodiment of the present disclosure;
FIG. 6 illustrates a process in which a UENF processes an SBI message according to an embodiment of the present disclosure;
FIG. 7 illustrates an example of defining an SBI message used by a UENF according to an embodiment of the present disclosure;
FIG. 8 illustrates an example of defining an SBI message value managed by a UENF according to an embodiment of the present disclosure; and
FIG. 9 to FIG. 12 are flowcharts illustrating communication scenarios according to an interface method performed by a UENF according to an embodiment of the present disclosure.

### Best Mode for Carrying out the Invention

Hereinafter, various embodiments of the present disclosure will be described with reference to the accompanying drawings.

The present disclosure relates to a technology for configuring a UE as a network function (NF) by configuring a service-based architecture in the UE.

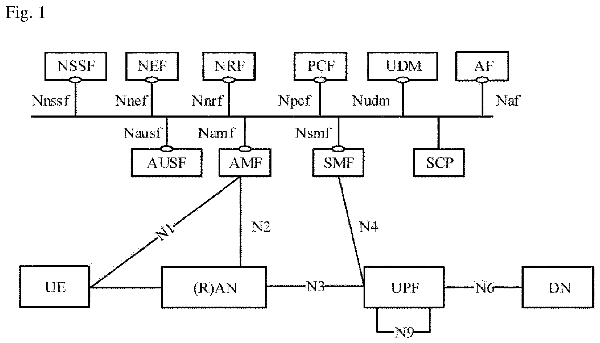

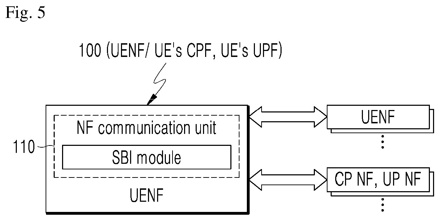

As illustrated in FIG. 1, 5G defines a network structure for supporting a UE, a base station (access), a core, and a server end to end, and defines a network structure in which an area (control plane) of a control signaling function and an area (user plane) of a data transmission/reception function are divided by separating control signaling and data transmission/reception functions performed complexly by a single node (e.g., a S-GW and a P-GW) in existing LTE (4G).

In 5G, control plane (CP) nodes may be defined as an access and mobility management function (AMF) that controls wireless section access of a UE, a policy control function (PCF) that manages/controls UE information, subscription service information by each UE, and a policy on charging or the like, a session management function (SMF) that controls/manages a session for each UE to use a data service, a network exposure function (NEF) that is responsible for a function of sharing information with an external network, a unified data management/authentication function (UDM/AUSF) that manages/controls a subscriber DB and authentication of a user, a network repository function (NRF) that manages/controls information about each network function (NF) in a network, a charging function (CHF) that processes charging of a subscriber, and the like.

Further, in 5G, a user plane (UP) node may be defined as a user plane function (UPF) that transmits and receives data between a UE and a server on an external service network (e.g., the Internet) through a session with the UE, based on control (interworking) of the SMF.

In addition, in 5G, a service communication proxy (SCP) is defined.

The SCP is responsible for a function of processing communications between various NF services, in which network functions (NFs) collectively referred to as the CP nodes (AMF, PCF, SMF, and the like) and the UP node (UPF) communicate via a service-based interface (SBI), in a mesh structure.

Accordingly, in 5G, when the SCP is introduced, communications based on messages of a common type/structure, that is, SBI messages, are implemented between NFs through the SCP.

The 5G core defines NFs that perform a specific function, and defines interworking between NFs using a service-based interface (SBI). In 5G, a CP node and a UP node correspond to an NF.

Accordingly, in the 5G core, communication between NF services is performed using an SBI, thereby very easily installing, distribution, and upgrading NFs, also configuring virtualization (VNF and CNF), and very efficiently using system resources.

However, for communication between a UE and a core network, only N1 interface-based communication through a radio access network (RAN) is used.

Accordingly, the UE basically needs to pass through a plurality of CP nodes, such as the RAN, the AMF, and the SMF, to communicate with the core network.

This is the reason why a procedure of the CP for processing a control signal for the UE is still centralized and a bottleneck occurs due to CP processing compared to UP processing despite evolution of a network structure that the UP node (e.g., the UPF) is distributed to an edge for ultra-low latency in 5G.

In addition, most of the CP nodes that the UE needs to pass through to communicate with the core network are merely responsible for simply transferring a control message between the UE and a destination node, thus causing a load to the CP nodes (e.g., the RAN, the AMF, and the SMF) and increasing costs for a simple transfer operation.

According to current 5G, the UE is in a level of still using a legacy interface (e.g., N1), that is, a level in which the UE has not evolved into a new 5G architecture and has not been rendered into an NF, thus having limitations (e.g. a bottleneck due to CP processing and an increase in load/cost of an NF serving as a transferring role).

Accordingly, the present disclosure is to render a UE into an NF by proposing a specific technology for evolving a UE into a 5G architecture and configuring the UE as an NF.

That is, the present disclosure has a key point of configuring a UE in a service-based architecture (SBA) in order to render the UE into an NF.

To this end, the present disclosure proposes a user equipment network function (UENF) that realizes configuration of a UE into an NF.

The UENF proposed in the present disclosure is configured in a service-based architecture (SBA) that performs communication using a message according to the service-based interface (SBI) between network functions (NFs).

In the present disclosure, the UENF configured in the SBA corresponds to a 5G UE, and may particularly be a 5G stand-alone (SA) UE.

Accordingly, the UENF configured as the UENF in the present disclosure may process a feature possessed by the UENF by rendering the feature into an SBI in a unit of NF service, and may include an SBI module (described later) in charge of such processing.

That is, the UENF configured as the UENF in the present disclosure may be configured in the service-based architecture (SBA) through installation of the SBI module (described later) that processes a feature possessed by the UENF by rendering the feature into an SBI in a unit of NF service.

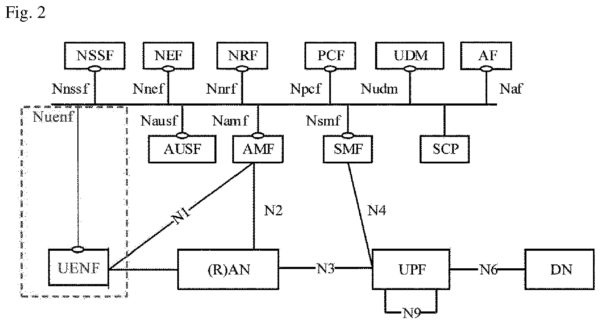

As illustrated in FIG. 2, a UENF configured in an SBA according to the present disclosure may be explained in a 5G network structure.

In an embodiment illustrated in FIG. 2, the UENF configured in the SBA according to the present disclosure may communicate directly with an NF (e.g., an AMF, an SMF, and a UPF) by using Nuenf (SBI message), and may also communicate directly with another UENF by using Nuenf (SBI message).

Further, the UENF configured in the SBA according to the present disclosure may directly communicate in a unit of NF service in the UENF and in a unit of NF service in another UENF by using Nuenf (SBI message).

The UENF configured in the SBA according to the present disclosure may also communicate as before by using a legacy interface (e.g., N1).

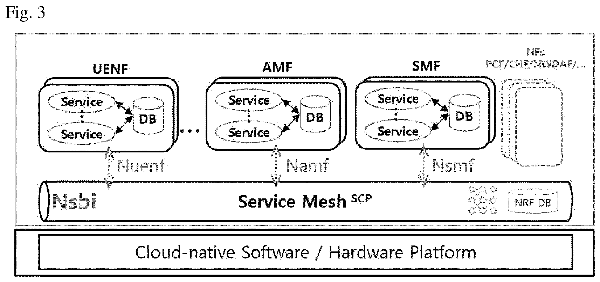

Specifically, as illustrated in FIG. 3, the UENF configured in the SBA according to the present disclosure may perform direct communication with another NF, such as an SMF and a CHF, through an SBI message (based on a service mesh when an SCP is introduced) like NFs collectively referred to as a CP node (AMF, SMF, CHF, and the like) and a UP node (UPF).

Thus, according to the present disclosure, as the UENF performs direct communication with another NF, it is possible to lighten an RAN, an AMF, and the like that perform interworking.

Furthermore, the present disclosure may achieve various performance improvement effects of making it possible to simplify a procedure by separating roles of session management and mobility management and enabling a Telco network configuration for providing a continuous service even in an RM by immediately identifying an NF information change and strengthening a 5G feature of a stainless structure.

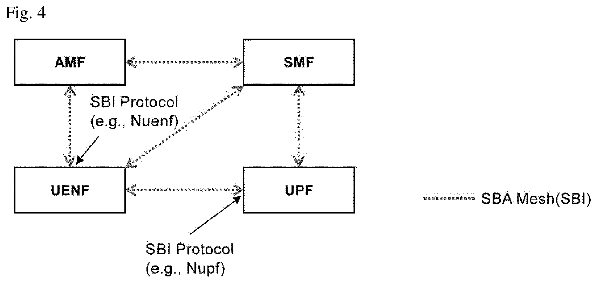

As described above and as seen in FIG. 4, in the present disclosure, a UE is configured in an SBA that performs communication using an SBI message, thereby being rendered into an NF and configured as a UENF.

Accordingly, the UENF configured in the SBA according to the present disclosure may communicate directly with not only an AMF but also another CP NF, such as an SMF, through an SBI message (protocol). Further, the UENF configured in the SBA according to the present disclosure may communicate directly with a UP NF, such as a UPF, through an SBI message (protocol).

As illustrated in FIG. 4, the UENF configured in the SBA according to the present disclosure may be configured as an NF service that features provided by the UE are divided into a function of a control plane (CP) (hereinafter, UE' control plane function (CPF)) and a function of a user plane (UP)(hereinafter, UE' user plane function (UPF)) and rendered into SBIs, and an SBI message (protocol) may be referred to as an API unit classification of "Nxxx" for each NF service (where xxx = NF).

The UENF configured in the SBA according to the present disclosure may communicate directly with another UENF through an SBI messages (protocol), and may also directly communicate in a unit of NF service therein and NF service in another UENF through an SBI messages (protocol).

FIG. 5 illustrates a configuration of a UENF configured in an SBA according to the present disclosure.

As described above, in the present disclosure, the UENF may be divided/configured into a CP function (UE'CPF) and a UP function (UE'UPF) provided by a UE.

However, in the following description, for convenience of explanation, a specific embodiment will be described with reference to the CP function (UE'CPF).

As illustrated in FIG. 5, the UENF 100 (e.g., a UE'CPF NF) according to an embodiment of the present disclosure is a function related to service use being realized/configured into an NF.

The UENF 100 (e.g., the UE'CPF NF) of the present disclosure includes an NF communication unit 110 configured to perform communication required in relation to service use in a UE in which the UENF 100 is configured.

The NF communication unit 110 performs communication using a service-based interface (SBI) message according to an SBI between NFs.

The NF communication unit 110 may be configured to include an SBI module configured to process an SBI message.

That is, the UENF 100 (e.g., the UE'CPF NF) of the present disclosure may have/include the NF communication unit 110 configured to perform communication with an NF by using an SBI message, particularly the SBI module, to configure the CP function (UE'CPF) possessed by the UE into an NF, thus being configured in an SBA.

The NF with which the NF communication unit 110, particularly the SBI module, communicates may be at least one of an NF service in the UENF, that is, the UENF 100 (e.g., the UE'CPF NF), another UENF, an NF service in the other UENF, a CP NF (e.g., an AMF, an SMF, or a PCF), and a UP NF (e.g., a UPF).

The SBI module mounted/included in the UENF 100 (e.g., the UE'CPF NF) of the present disclosure operates by at least one transmission/reception method among request/response-based message transmission/reception and subscription/notification-based message transmission/reception.

Specifically, the SBI module mounted/included in the UENF 100 (e.g., the UE'CPF NF) of the present disclosure may be referred to as a message interface for processing each NF service in which the CP function (UE'CPF) is rendered into an SBI in a unit of NF service.

The SBI module is an interface that processes reception (input, receive, or ingress)/transmission (output, send, or egress) for processing of each NF service.

The SBI module operates as a request/response and subscription/notification in the message interface.

In addition, the SBI module mounted/included in the UENF 100 (e.g., the UE'CPF NF) of the present disclosure may perform conversion between a message according to another interface and an SBI message according to the SBI when transmitting/receiving a message.

That is, the SBI module mounted/included in the UENF 100 (e.g., the UE'CPF NF) of the present disclosure may process/convert an NAS layer and a message of a legacy protocol (e.g., GTP-C, GTPP, or SCTP) that are received (input, receive, or ingress) to be transmitted (output, send, or egress) as an SBI message (SBI protocol), and may process/convert an SBI message (SBI protocol) received (input, receive, or ingress) to be transmitted (output, send, or egress) as an NAS Layer and a message of the legacy protocol (e.g., GTP-C, GTPP, or SCTP).

The UENF 100 (e.g., the UE'CPF NF) of the present disclosure may render all other NAS signaling into an SBI in the CP function (UE'CPF) provided by the UE through the SBI module.

In an embodiment, the SBI module mounted/included in the UENF 100 (e.g., the UE'CPF NF) of the present disclosure may convert a legacy message of the UE (e.g., the UE'CPF) into an SBI for NF service communication between UEs (or communication between UENF services), and this conversion function may be internalized in an autonomous process or may perform conversion of rendering a legacy message into an SBI.

As described above, the UENF 100 (e.g., the UE'CPF NF) of the present disclosure may perform direct communication between each NF service in which the CP function (UE'CPF) provided by the UE is rendered into the SBI and another NF service (between UEs (or UENFs), in the UE (or UENF), or UENF-core) (based on a service mesh when an SCP is introduced), based on the SBI module.

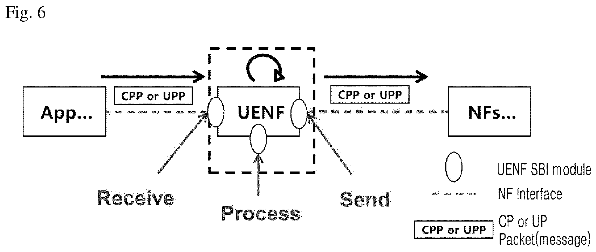

Hereinafter, a process in which the UENF 100 (e.g., the UE'CPF NF) of the present disclosure processes an SBI message will be described with reference to FIG. 6.

As illustrated in FIG. 6, the UENF 100 (e.g., the UE'CPF NF) of the present disclosure, particularly the SBI module mounted/included, basically performs reception (input, receive, or ingress)/process/transmission (output, send, or egress).

A message (SBI Msg.) interfaced by the SBI module refers to a data packet including a header of an application layer, such as HTTP, HTTP/2, and QUIC defined by the SBI.

The message interfaced by the SBI module may be understood as "data", "packet", "payload", "content", "header information", or the like. A type of the header included in the message may include GTP-C, GTP-U, TCP, IP, version information, or the like.

In addition, information included in the header in the message may include a source address, a destination address, a port number, and the like for transmission/reception. Further, the message may include a plurality (N) of headers rather than one header.

The header in the message interfaced by the SBI module of the present disclosure includes information that enables identification of a type of data and enables identification of actual content of the data and how to process the data.

Accordingly, an NF receiving the message may identify the data and know how to process the data, based on the header in the message.

As illustrated in FIG. 6, the message handled by the UENF 100 may be divided into a CP message and a UP message as follows as the features provided by the UE are divided into the function of the CP (UE'CPF) and the function of the UP (UE'UPF).

CPP: Control plane packet (including header information)

UPP: User plane packet (including header information)

Accordingly, the UENF 100 (e.g., the UE'CPF NF) of the present disclosure, particularly the mounted/equipped SBI module, may know how payload for each UENF type is classified, based on the header in the message when performing reception (input, receive, or ingress).

For example, when receiving a specific CPP generated in an application in the UE, the UENF 100 (e.g., the UE'CPF NF), particularly the SBI module, may perform a procedure of interpreting/classifying the message accordingly and delivering the same to an appropriate processing resource. Here, the SBI module may perform decapsulation or the like on the header.

The UENF 100 (e.g., the UE'CPF NF) of the present disclosure, particularly the mounted/equipped SBI module, processes payload for each UENF type according to content of the message content, based on the header in the message when performing processing. Since a processing method is the same as an operation defined in the specifications, a detailed description is omitted.

The UENF 100 (e.g., the UE'CPF NF) of the present disclosure, particularly the mounted/equipped SBI module, may determine an NF of destination after performing processing for each UENF type when performing transmission (output, send, or egress).

As described above, generally, a CP NF (including the UE'CPF NF) is transmitted/sent to an NF of the CP, and a UP NF (UE'UPF NF) is transmitted/sent to an NF of the UP. Here, the SBI module may input a destination address in the header to transmit the message, and may perform encapsulation/decapsulation by not only modifying the header but also generating an additional header.

As described above, the UENF 100 (e.g., the UE'CPF NF) of the present disclosure, particularly the mounted/equipped SBI module, may classify a received (input, receive, or ingress) message, may perform basic header processing (encapsulation/decapsulation) on the message (data packet), and may perform CP or UP function (actual processing), based on the header-processed packet.

In addition, when the UE'CPF NF and the UE'UPF NF are configured as a single SBA, the UENF 100 (e.g., the UE'CPF NF) of the present disclosure, particularly the mounted/equipped SBI module, may also have a function (common plane I/F) capable of handling the CP and the UP in common.

Further, when necessary, the UENF 100 (e.g., the UE'CPF NF) of the present disclosure, particularly the mounted/equipped SBI module, may immediately forward the message (data packet) to another NF depending on a state of the NF (UENF) and processing load.

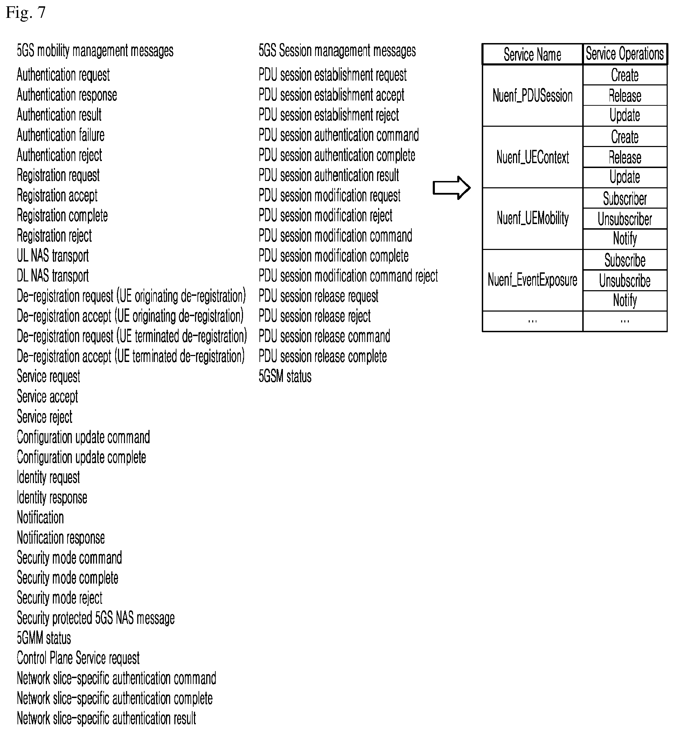

FIG. 7 illustrates an example of defining an SBI message used by a UENF of the present disclosure, particularly a UENF (UE'CPF NF) in which a CP function (UE'CPF) is configured as in the foregoing embodiment.

In the present disclosure, the SBI message used by the UENF (UE'CPF NF) in which the CP function (UE'CPF) is configured, for example, a service name for communicating with an NF of a CP, may be configured as an example of a table illustrated in FIG. 7.

In a specific example, the SBI message used by the UENF (UE'CPF NF), for example, the service name for communicating with the NF of the CP, may be determined as four types as follows.

Nuenf_PDUSession: PDU session-associated processing

Nuenf_UEContext: Management of UE information

Nuenf_UEMobility: Management of UE mobility

Nuenf_EventExposure: Subscriber/Notify relating to UE configuration

For reference, names and types of messages are basically distinguished by 'service names', and are distinguished by service operations for the respective service names.

Each service operation is a type of message that is exchanged between NFs, and basically includes Create/Update/Delete/Subscribe/Unsubscribe.

Each service operation may be arranged as various attribute names (e.g., a SUPI, an S-NSSAI, and a DNN for an SMF).

A process logic for each UENF may vary depending on each function and feature provided by a configured UE.

For example, each NF including an AMF generally has four functional categories of service names, service operations according to the service names, and attribute names according to the service operations, and the NF (e.g., the AMF) operates accordingly.

That is, regarding a process for each UENF, the UENF may determine which call the UENF processes depending on a service name, a service operation, and an attribute name, and may determine whether to process or not to process (Yes/No) a specific service and a message depending on a load state (e.g., CPU load and memory usage) thereof.

In the present disclosure, since a UE is also rendered into an NF to be configured as a UENF, the UENF may have a functional category of a service name, a service operation according to the service name, and an attribute name according to the service operation like other NFs (e.g., the AMF), and the UENF may operate accordingly.

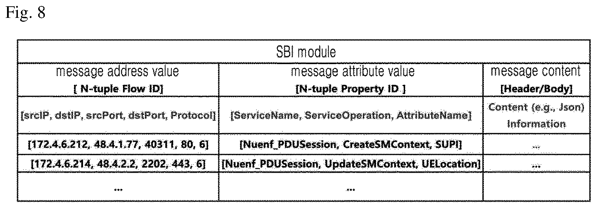

FIG. 8 illustrates an example of defining an SBI message value managed by a UENF according to an embodiment of the present disclosure.

That is, the example may be a table defining SBI message values managed by the SBI module mounted/included in the UENF 100 (e.g., the UE'CPF NF) of the present disclosure.

As illustrated in FIG. 8, a message address and a message attribute value are matched for each process (e.g., process ID unit) performed in the SBI module.

That is, the SBI module has a structure of extracting related contents when an SBI message, that is, a data packet, is received, and allocating and processing the same to a resource mapped to each process (process ID).

For reference, the message address may be based on at least a 5-tuple flow ID value, and the message attribute may be based on at least a 3-tuple property ID value. For reference, a tuple may also be a wildcard *. Further, N-tuple-based IDs may be basically managed as one integrated ID through hashing.

Hereinafter, embodiments in which the UENF 100 (e.g., the UE'CPF NF) of the present disclosure performs communication using an SBI message will be described.

According to an embodiment, when processing an information change related to service use, the NF communication unit 110 (SBI module) may directly communicate with an SMF that manages/controls a UE session by using an SBI message.

Here, the information change related to the service use may be a change in information (e.g., address information) about a server connected for service use, and may also refer to an UP NF change or an NF service change.

Specifically, when processing the change in the information about the server connected for service use, particularly the server address information (e.g., an IP address), the NF communication unit 110 (SBI module) may directly communicate with an edge application server discovery function (EASDF) by using an SBI message.

For example, when a function of the EASDF is included in the SMF, the NF communication unit 110 (SBI module) may directly communicate with the SMF (including the function of the EASDF) by using an SBI message when processing the change in the address information (e.g., the IP address) about the server connected for service use.

That is, when processing the change in the address information (e.g., the IP address) about the server while using a service from the server (application server) through an established UP path, the UENF 100 (e.g., the UE'CPF NF) of the present disclosure may directly perform SBI communication with the SMF (including the function of the EASDF) without going through an AMF or the like to process the change.

According to another embodiment, when transmitting a notification upon detection of a specific event already subscribed to by the AMF, the NF communication unit 110 (SBI module) may use an SBI message.

That is, in the present disclosure, other NFs including the AMF subscribe to the UENF 100 (e.g., the UE'CPF NF) of the present disclosure, thus immediately receiving a notification based on an SBI message from the UENF 100 (e.g., the UE'CPF NF) when the UENF 100 (e.g., the UE'CPF NF) detects an event (e.g., an information change, load, a threshold value or higher/lower, a H/O, a specific subscriber, and a region) with respect to a specific radio device (e.g., an RAN) or a specific radio resource block (RB).

According to another embodiment, when processing session management for the UENF 100, the NF communication unit 110 (SBI module) may directly communicate with the SMF that manages/controls the UE session by using an SBI message without going through another NF.

That is, when performing a PDU session control (e.g., Create, Update, and Delete)-related process, the UENF 100 (e.g., the UE'CPF NF) of the present disclosure may perform SBI communication directly with the SMF without going through the AMF or the like.

According to another embodiment, when performing a quality (QoS policy)-related process for the UE, the NF communication unit 110 (SBI module) may directly communicate with a PCF that manages/controls a plurality of policies including the QoS policy by using an SBI message without going through another NF.

That is, when performing the QoS policy-related process, the UENF 100 (e.g., the UE'CPF NF) of the present disclosure may perform SBI communication directly with the PCF without going through the AMF or the like.

As described above, the PCF or the SMF also subscribes to the UENF 100 (e.g., the UE'CPF NF) of the present disclosure, thus immediately receiving a notification of information (e.g., QoS scheduling information, QoS priority, and NW slice information) about a radio resource block (RB) upon detection of an event, in which the PCF or the SMF may directly communicate with the UENF 100 (e.g., the UE'CPF NF) through the SBI without going through the RAN, the AMF, or the like.

According to another embodiment, when performing a registration process of registering an NF of the UENF 100 (e.g., the UE'CPF NF) in an NRF that manages/controls information about each NF in a network, the NF communication unit 110 (SBI module) may directly communicate by using an SBI message without going through another NF.

That is, when performing the registration process related to the NF of the UENF, the UENF 100 (e.g., the UE'CPF NF) of the present disclosure may perform SBI communication directly with the NRF without going through the AMF or the like.

In addition to the foregoing embodiments, the UENF 100 (e.g., the UE'CPF NF) of the present disclosure may directly perform various types/categories of communications, which are conventionally performed via the RAN or the like to communicate with a core NF, without going through the RAN, the AMF, or the like by using SBI communication.

As described above, in the present disclosure, the SBI module enabling the UE (specifically the UE'CPF and the UE'UPF) to evolve into a 5G architecture and to be configured as an NF may be specifically defined/configured, thereby rendering not only 5G devices (e.g., a CP node and a UP node) but also the UE into NFs.

Further, in the present disclosure, realizing the UENF in which the SBI module is mounted/included as described above enables communication between specific UE instances and UE sets to be very free, and enables development, installation, and distribution (migration, package upgrade, duplexing/multiplexing) of a communication configuration to very easily evolve in the specifications.

In addition, in the present disclosure, realizing the UENF in which the SBI module is mounted/included as described above enables communication between UEs (or UENFs) and within a UE (or UENF) to be very effectively configured to achieve a cloud-native structure, enables functions to be freely decomposed, and enables a service to be quickly ready in units of "function, feature, package, and patch" efficiently in a container/VM virtualization environment.

Furthermore, in the present disclosure, signaling and data processing methods that are sensitive to delay/performance may also employ the SBI (e.g., a new protocol of HTTP or HTTP/2 type) suitable for Telco IT to increase flexibility and agility, to quickly verify functionality, and to improve operational efficiency, thereby very quickly providing new products and services.

In 5G, a structure has evolved to distribute UP nodes (e.g., a UPF and a server) to an edge for ultra-high speed and ultra-low delay, which enables a UE to establish a shortest UP path with an optimal node (e.g., a server (application server)) configured at the edge.

Accordingly, a conventional UE using only a legacy interface (e.g., N1) is unable to utilize a shortest UP path, while the UENF 100 (e.g., the UE'CPF NF) of the present disclosure may use a previously established shortest UP path as a fast communication path to process (encapsulation for SBI transmission)/perform SBI-based direct communication with a desired NF.

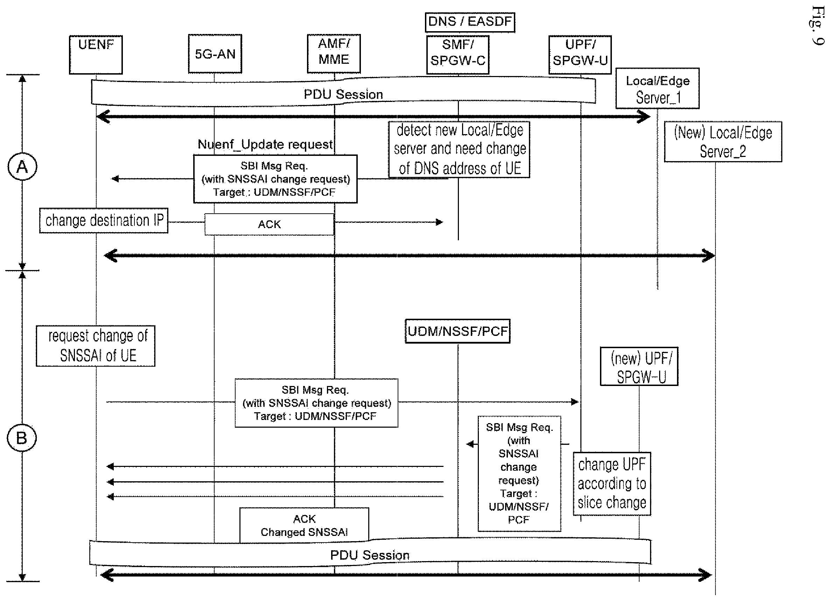

Hereinafter, an interface method according to an embodiment of the present disclosure, that is, an interface method performed in a UENF proposed by the present disclosure, will be described with reference to FIG. 9 to FIG. 12.

As described above, the UENF proposed in the present disclosure may directly perform various types/categories of communications, which are conventionally performed via an RAN, an AMF, or the like to communicate with a core NF, without going through the RAN, the AMF, or the like by using SBI communication, may communicate with the AMF or the like by using SBI communication, and may perform communication between UEs (or UENFs) or in a UE (or UENF) by using an SBI.

However, for convenience of explanation, some embodiments of various call flows that the UENF of the present disclosure is able to perform through the SBI are described hereinafter.

First, a call flow in a case of processing an information change related to service use is described as an embodiment of a call flow that the UENF of the present disclosure is able to perform through the SBI with reference to FIG. 9.

In FIG. 9, a call flow in a case of processing a change in server address information (e.g., an IP address) is divided into a call flow A of reporting a service change (e.g., a server information change) from a core to a UE and a call flow B of obtaining the service change (e.g., a UPF/SPGW-U change) from the core by using a previously established shortest UP path as a fast communication path.

In FIG. 9, a call flow in which an SMF/SPGW-C includes a function of a DNS server is assumed. For example, the SMF/SPGW-C may include a function of a DNS/edge application server discovery function (EASDF).

First, in the call flow A, the SMF on a core side is a UENF that uses a service through a UP path (PDU session) established with Local/Edge Server_1, and may directly report address information about an optimal UP node, that is, adjacent Local/Edge server_2, when determining a server address change through the function of the EASDF.

Here, according to the present disclosure, the foregoing UENF configured as the NF by mounting the SBI module may perform SBI communication directly with the SMF without going through the AMF (e.g., Nuenf_Update request).

That is, as illustrated in FIG. 9, when a specific service is changed, the core may immediately report, based on an SBI between the UENF/SMF of the present disclosure, a change in the specific service to the UENF by processing a request/response.

In the present disclosure, when a specific service is changed, the core may also immediately report, based on the SBI between the UENF/SMF of the present disclosure, a change in the specific service to the UENF by processing a subscription/notification.

For reference, this embodiment shows an example in which the UENF may include an edge DNS client (EDC) function for SBI communication between the UENF and the EASDF.

In this case, in the present disclosure, the UENF may also be defined to perform direct communication with the EASDF through a specific SBI message, such as Nedc, in addition to the foregoing Nuenf SBI message.

In a specific example, the UENF may have a service name of Nedc_DNSQuery, service operations of Create/Modify/Delete, and operation semantics of Request/Response types. Further, the UENF may also have a service name of Nedc_DNSAddress, service operations of Get/Subscribe/Unsubscribe, and operation semantics of Subscribe/Notify types.

Next, in the call flow B, when determining an SNSSAI change, the UENF of the present disclosure may transmit an SNSSAI change request to a UPF->UDM/NSSF/PCF by using a previously established shortest UP path (PDU session) as a fast communication path.

Here, to transmit the SNSSAI change request to a desired NF (e.g., the UDM/NSSF/PCF) by using the established UP path, the UENF may encapsulate and transmit an SBI-based message of the SNSSAI change request to go through the UP path.

In this case, the UDM/NSSF/PCF may report an SBI-based message for the SNSSAI change directly to the UENF using a service through the UP path (PDU session) established through the UPF/SPGW-U.

As described above, according to the present disclosure, the UENF configured as the NF by mounting the SBI module may perform SBI-based direct communication with a desired NF is performed by utilizing a previously established shortest UP path as a fast communication path without going through the AMF, thereby changing information (e.g., server address information and SNSSAI) related to service use.

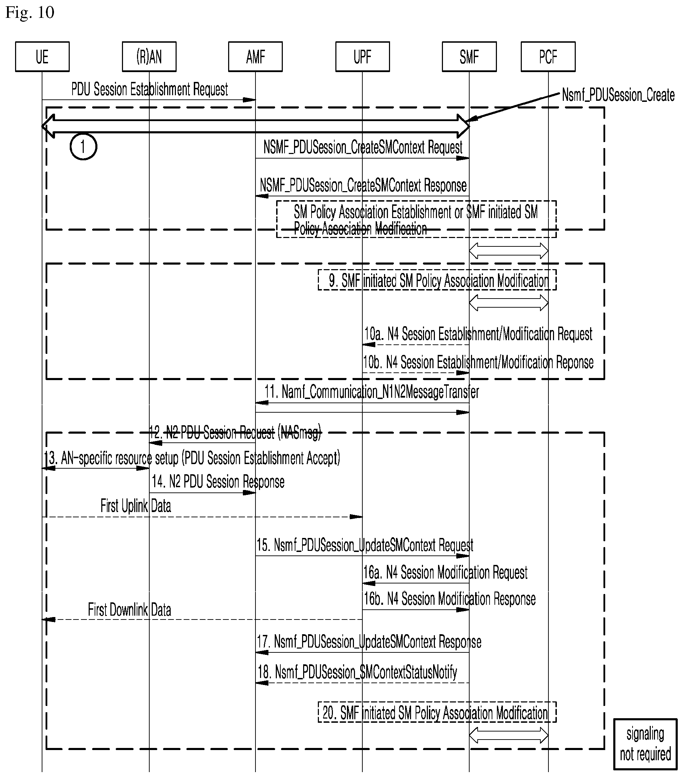

Next, a PDU session control (e.g., Create, Update, and Delete)-related call flow including direct communication with an SMF is described as an embodiment of a call flow that the UENF of the present disclosure is able to perform through the SBI with reference to FIG. 10.

As illustrated in FIG. 10, an existing UE uses a legacy interface, for example, an N1 interface, and thus has a structure of being able to communicate with the SMF via an AMF.

However, according to the present disclosure, as illustrated in FIG. 10, the UENF configured as the NF by mounting the SBI module may perform SBI communication directly with the SMF without going through the AMF (①, e.g., Nsmf_PDUSession_Create), and thus signaling (dark gray box) that needs to go through the AMF may be unnecessary and omitted.

Accordingly, the call flow between the UENF and the SMF may be simplified/streamlined, and effects, such as optimization of an AMF function and shortening of overall signaling, may also be expected.

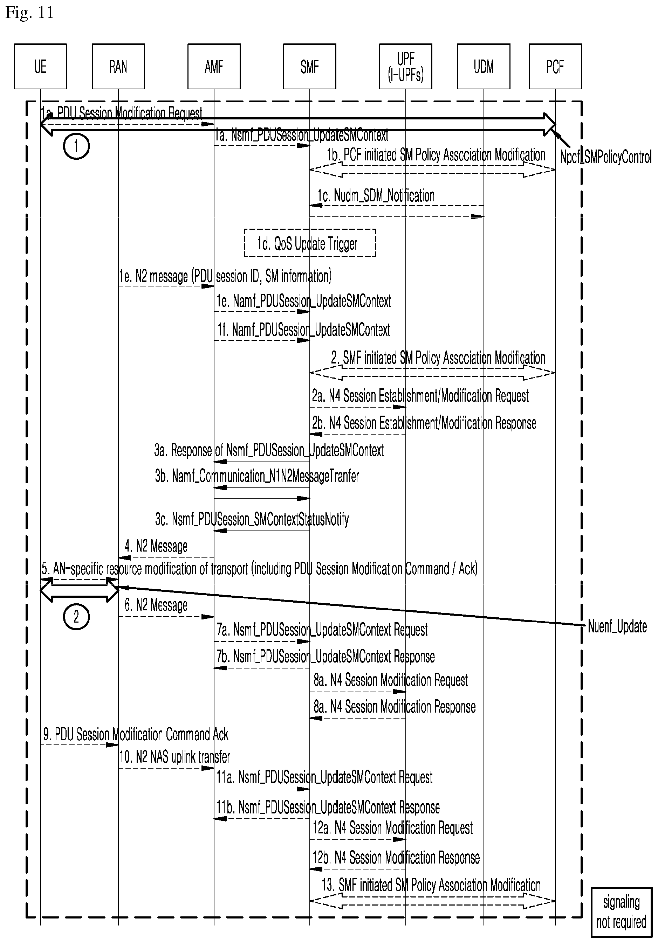

Next, a QoS policy-related call flow including direct communication with a PCF is described as an embodiment of a call flow that the UENF of the present disclosure is able to perform through the SBI with reference to FIG. 11.

As illustrated in FIG. 11, an existing UE uses a legacy interface, for example, an N1 interface, and thus has a structure of being able to communicate with the PCF via an AMF.

However, according to the present disclosure, as illustrated in FIG. 11, the UENF configured as the NF by mounting the SBI module may perform SBI communication directly with the PCF without going through the AMF (①, e.g., Npcf_SMPolocy Control) and only needs to forward changed information due to the direct communication with the PCF (②, e.g., Nneuf_Updata), and thus most conventional signaling (dark gray box) that needs to go through the AMF may be unnecessary and omitted.

Accordingly, the call flow between the UENF and the PCF may be simplified/streamlined, and effects, such as optimization of an AMF function, shortening of overall signaling, and the PCF immediately receiving information (e.g., QoS scheduling information, a QoS priority, and NW slice information) from the UENF may also be expected.

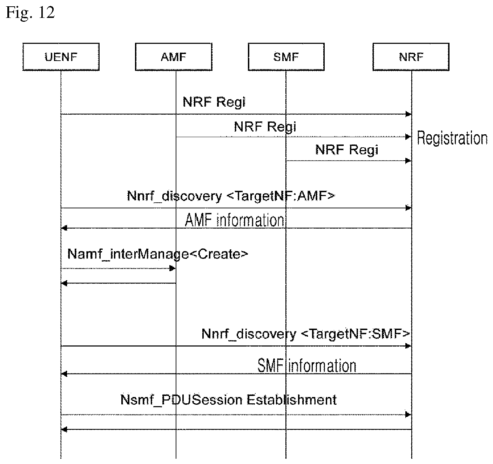

Next, a NF registration-related call flow including direct communication with an NRF is described as an embodiment of a call flow that the UENF of the present disclosure is able to perform through the SBI with reference to FIG. 12.

As illustrated in FIG. 12, according to the present disclosure, the UENF configured as the NF by mounting the SBI module may perform SBI communication directly with the NRF by using an SBI message (e.g., NRF Regi) without going through an AMF, like a core NF including the AMF and an SMF.

Further, the UENF performs SBI communication directly with the NRF without going through the AMF, like the core NF including the AMF and the SMF, enabling various direct communications/interworking, such as discovering an NF (e.g., the AMF and the SMF) to process a service request.

As described above, according to the present disclosure, the SBI module enabling the UE (specifically the UE'CPF and the UE'UPF) to evolve into a 5G architecture and to be configured as an NF may be specifically defined/configured, thereby rendering not only 5G devices (e.g., a CP node and a UP node) but also the UE into NFs.

The interface method according to the embodiment of the present disclosure may be configured in the form of program instructions that can be executed through various computer devices and may be recorded in a computer-readable medium. The computer-readable medium may include a program instruction, a data file, a data structure, and the like alone or in combination. The program instruction recorded in the medium may be specially designed and configured for the present disclosure, or may be known and available to those skilled in computer software. Examples of the computer-readable recording medium include magnetic media, such as a hard disk, a floppy disk, and a magnetic tape, optical media, such as a CD-ROM and a DVD, magneto-optical media, such as a floptical disk, and a hardware device specially configured to store and perform a program instruction, such as a ROM, a RAM, and a flash memory. Examples of the program instruction include not only a machine code made by a compiler but also a high-level language code executable by a computer using an interpreter. The hardware device may be configured to operate as one or more software modules to perform an operation of the present disclosure, and vice versa.

Although the present disclosure has been described in detail with reference to the exemplary embodiments, the present disclosure is not limited to these embodiments, and various changes and modifications may be made by those skilled in the art to which the present disclosure belongs without departing from the scope of the present disclosure claimed in the following claims.

## Claims

1. A user equipment, UE (100), using a service, the UE comprising an NF communication unit (110) configured to perform communication required in relation to use of the service,
wherein the NF communication unit (110) is configured to perform communication using a service-based interface, SBI, message according to an SBI between network functions, NFs,
wherein the NF communication unit (110) includes an SBI module configured to process the SBI message, and
wherein the SBI module is a message interface for processing each NF service in which control plane, CP, function is rendered into an SBI in a unit of NF service.

2. The UE of claim 1, wherein the NF communication unit (110) communicates with an NF,
wherein the NF is at least one of an NF service in the UE, other UE, an NF service in other UE, an NF of a control plane, and an NF of a user plane.

3. The UE of claim 1, wherein the SBI module is configured to operate in at least one of request/response-based message transmission/reception and subscription/notification-based message transmission/reception.

4. The UE of claim 1, wherein the SBI module is configured to perform conversion between a message according to other interface and the SBI message according to the SBI in the case of message transmission/reception.

5. The UE of claim 1, wherein the NF communication unit (110) is configured to directly communicate with an edge application server discovery function, EASDF, by using the SBI message when changing information about a server connected to use the service.

6. The UE of claim 1, wherein the NF communication unit (110) is configured to use the SBI message when transmitting a notification according to detection of a specific event subscribed by an access and mobility management function, AMF.

7. The UE of claim 1, wherein the NF communication unit (110) is configured to directly communicate with a session management function, SMF, that manages/controls a UE session by using the SBI message when processing session management for the UE.

8. The UE of claim 1, wherein the NF communication unit (110) is configured to directly communicate with a policy control function, PCF, that manages/controls a plurality of policies comprising a QoS policy by using the SBI message when processing a QoS policy for the UE.

9. The UE of claim 1, wherein the NF communication unit (110) is configured to directly communicate by using the SBI message when performing a registration process of registering an NF of the UE in a network repository function, NRF, that manages/controls information about each NF in a network.

10. The UE of claim 1, wherein the NF communication unit (110) is configured to directly communicate with each of NFs of CP by using the SBI message according to the SBI between NFs, without going through a radio access network, RAN, or an access and mobility management function, AMF.

11. An interface method performed by a user equipment, UE (100), the method comprising performing communication related to use of a service by using a service-based interface, SBI, message according to an SBI between network functions, NFs; processing, by an SBI module of the UE, the SBI message; and processing, by the SBI module, each NF service in which a control plane (CP) function is rendered into an SBI, wherein the SBI module operates as a message interface for processing each NF service.

## Patentansprüche

1. Benutzereinrichtung (UE) (100), die einen Dienst verwendet, wobei die UE eine NF-Kommunikationseinheit (110) umfasst, die dazu ausgebildet ist, eine Kommunikation durchzuführen, die in Bezug auf eine Verwendung des Dienstes erforderlich ist,
wobei die NF-Kommunikationseinheit (110) dazu ausgebildet ist, eine Kommunikation unter Verwendung einer Nachricht über eine dienstbasierte Schnittstelle (SBI) gemäß einer SBI zwischen Netzwerkfunktionen (NF) durchzuführen,
wobei die NF-Kommunikationseinheit (110) ein SBI-Modul aufweist, das dazu ausgebildet ist, die SBI-Nachricht zu verarbeiten, und
wobei das SBI-Modul eine Nachrichtenschnittstelle zum Verarbeiten jedes NF-Dienstes ist, bei dem eine Funktion einer Steuerungsebene (CP) in eine Einheit eines NF-Dienstes in eine SBI umgesetzt ist.

2. UE nach Anspruch 1, wobei die NF-Kommunikationseinheit (110) mit einer NF kommuniziert,
wobei die NF mindestens eines von einem NF-Dienst in der UE, einer anderen UE, einem NF-Dienst in einer anderen UE, einer NF einer Steuerungsebene und einer NF einer Benutzerebene ist.

3. UE nach Anspruch 1, wobei das SBI-Modul dazu ausgebildet ist, in mindestens einer/einem von einer/einem anfrage-/antwortbasierten Nachrichtensendung/- empfang und einer/einem abonnement-/benachrichtigungsbasierten Nachrichtensendung/- empfang zu arbeiten.

4. UE nach Anspruch 1, wobei das SBI-Modul dazu ausgebildet ist, eine Konvertierung zwischen einer Nachricht gemäß einer anderen Schnittstelle und der SBI-Nachricht gemäß der SBI im Falle einer/eines Nachrichtensendung/-empfangs durchzuführen.

5. UE nach Anspruch 1, wobei die NF-Kommunikationseinheit (110) dazu ausgebildet ist, direkt mit einer Edge-Anwendungsserver-Erkennungsfunktion, EASDF, zu kommunizieren, indem sie die SBI-Nachricht verwendet, wenn sich Informationen über einen Server ändern, der zur Verwendung des Dienstes verbunden ist.

6. UE nach Anspruch 1, wobei die NF-Kommunikationseinheit (110) dazu ausgebildet ist, die SBI-Nachricht zu verwenden, wenn sie eine Benachrichtigung gemäß einer Erkennung eines bestimmten Ereignisses sendet, die von einer Zugangs- und Mobilitätsmanagementfunktion, AMF, abonniert ist.

7. UE nach Anspruch 1, wobei die NF-Kommunikationseinheit (110) dazu ausgebildet ist, direkt mit einer Sitzungsverwaltungsfunktion, SMF, zu kommunizieren, die eine UE-Sitzung verwaltet/steuert, indem sie die SBI-Nachricht verwendet, wenn eine Sitzungsverwaltung für die UE verarbeitet wird.

8. UE nach Anspruch 1, wobei die NF-Kommunikationseinheit (110) dazu ausgebildet ist, direkt mit einer Richtliniensteuerungsfunktion (PCF) zu kommunizieren, die mehrere Richtlinien, die eine QoS-Richtlinie umfassen, verwaltet/steuert, indem sie die SBI-Nachricht verwendet, wenn eine QoS-Richtlinie für die UE verarbeitet wird.

9. UE nach Anspruch 1, wobei die NF-Kommunikationseinheit (110) dazu ausgebildet ist, direkt unter Verwendung der SBI-Nachricht zu kommunizieren, wenn ein Registrierungsvorgang zur Registrierung einer NF der UE in einer Netzwerk-Repository-Funktion (NRF) durchgeführt wird, die Informationen über jede NF in einem Netzwerk verwaltet/steuert.

10. UE nach Anspruch 1, wobei die NF-Kommunikationseinheit (110) dazu ausgebildet ist, direkt mit jeder der NF der CP zu kommunizieren, indem sie die SBI-Nachricht gemäß der SBI zwischen NFs verwendet, ohne dabei ein Funkzugangsnetzwerk (RAN) oder eine Zugangs- und Mobilitätsmanagementfunktion (AMF) zu durchlaufen.

11. Schnittstellenverfahren, das von einem Benutzergerät (UE) (100), durchgeführt wird, wobei das Verfahren umfasst: ein Durchführen einer Kommunikation in Bezug auf eine Verwendung eines Dienstes unter Verwendung einer Nachricht über eine dienstbasierte Schnittstelle (SBI) gemäß einer SBI zwischen Netzwerkfunktionen (NF); ein Verarbeiten der SBI-Nachricht durch ein SBI-Modul der UE; und ein Verarbeiten jedes NF-Dienstes durch das SBI-Modul, bei dem eine Funktion einer Steuerungsebene (CP) in eine SBI umgesetzt wird, wobei das SBI-Modul als Nachrichtenschnittstelle zum Verarbeiten jedes NF-Dienstes arbeitet.

## Revendications

1. Équipement utilisateur (UE) (100), utilisant un service, l'UE comprenant une unité de communication NF (110) configurée pour mettre en œuvre une communication requise en lien avec l'utilisation du service,
dans lequel l'unité de communication NF (110) est configurée pour mettre en œuvre une communication au moyen d'un message d'interface basée sur les services (SBI), conformément à une SBI, entre des fonctions de réseau (NF),
dans lequel l'unité de communication NF (110) comporte un module de SBI configuré pour traiter le message de SBI, et
dans lequel le module de SBI est une interface de messages pour traiter chaque service de NF dans lequel une fonction de plan de contrôle (CP) est exposée sous la forme d'une SBI dans une unité de service de NF.

2. UE selon la revendication 1, dans lequel l'unité de communication NF (110) communique avec une NF,
dans lequel la NF est au moins l'un parmi un service de NF dans l'UE, un autre UE, un service de NF dans un autre UE, une NF d'un plan de contrôle et une NF d'un plan d'utilisateur.

3. UE selon la revendication 1, dans lequel le module de SBI est configuré pour fonctionner en au moins un parmi émission/réception de messages basée sur requête/réponse et émission/réception de messages basée sur abonnement/notification.

4. UE selon la revendication 1, dans lequel le module de SBI est configuré pour mettre en œuvre une conversion entre un message conformément à une autre interface et le message de SBI conformément à la SBI dans le cas de l'émission/réception de messages.

5. UE selon la revendication 1, dans lequel l'unité de communication NF (110) est configurée pour communiquer directement avec une fonction de découverte du serveur d'application en périphérie (EASDF), au moyen du message de SBI lors d'un changement d'information concernant un serveur connecté pour utiliser le service.

6. UE selon la revendication 1, dans lequel l'unité de communication NF (110) est configurée pour utiliser le message de SBI lors de l'émission d'une notification conformément à la détection d'un événement spécifique à laquelle une fonction de gestion des accès et de la mobilité (AMF) est abonnée.

7. UE selon la revendication 1, dans lequel l'unité de communication NF (110) est configurée pour communiquer directement avec une fonction de gestion de session (SMF) qui gère/contrôle une session d'UE au moyen du message de SBI lors du traitement de la gestion de session pour l'UE.

8. UE selon la revendication 1, dans lequel l'unité de communication NF (110) est configurée pour communiquer directement avec une fonction de contrôle de politique (PCF) qui gère/contrôle une pluralité de politiques comprenant une politique de QoS au moyen du message de SBI lors du traitement d'une politique de QoS pour l'UE.

9. UE selon la revendication 1, dans lequel l'unité de communication NF (110) est configurée pour communiquer directement au moyen du message de SBI lors de la mise en œuvre d'un procédé d'enregistrement consistant à enregistrer une NF de l'UE dans une fonction de référentiel de réseau (NRF) qui gère/contrôle des informations concernant chaque NF dans un réseau.

10. UE selon la revendication 1, dans lequel l'unité de communication NF (110) est configurée pour communiquer directement avec chacune des NF de CP au moyen du message de SBI, conformément à la SBI, entre des NF, sans passer par un réseau d'accès radioélectrique (RAN) ou une fonction de gestion des accès et de la mobilité (AMF).

11. Procédé d'interface mis en œuvre par un équipement utilisateur (UE) (100), le procédé comprenant les étapes consistant à mettre en œuvre une communication liée à l'utilisation d'un service au moyen d'un message d'interface basée sur les services (SBI), conformément à une SBI, entre des fonctions de réseau (NF) ; traiter, au moyen d'un module de SBI de l'UE, le message de SBI ; et traiter, au moyen du module de SBI, chaque service de NF dans lequel une fonction de plan de contrôle (CP) est exposée sous la forme d'une SBI, le module de SBI fonctionnant comme interface de messages pour traiter chaque service de NF.
